# EUROPÄISCHE PATENTSCHRIFT

(11) **EP 3 087 572 B1**
(45) Veröffentlichungstag und Bekanntmachung des Hinweises auf die Patenterteilung: **25.11.2020**
(21) Anmeldenummer: 14707720.0
(22) Anmeldetag: 26.02.2014
(51) Int. Cl.: H01C 7/12

(54) **ELEKTRISCHES BAUELEMENT**
ELECTRICAL COMPONENT
COMPOSANT ÉLECTRIQUE

(43) Veröffentlichungstag der Anmeldung: 02.11.2016
(73) Patentinhaber: Siemens Aktiengesellschaft, 80333 München (DE)
(72) Erfinder: SCHMITT, Daniel, 90459 Nürnberg (DE); BREHM, Holger Siegmund, 91052 Erlangen (DE); BÖHM, Matthias, 91564 Neuendettelsau (DE)
(86) Internationale Anmeldenummer: PCT/EP2014/053730
(87) Internationale Veröffentlichungsnummer: WO 2015/127968

(56) Entgegenhaltungen:
- DE-A1-102009 057 288
- JP-A- 2007 288 824
- US-A- 5 793 278

## Beschreibung

Die Erfindung betrifft ein elektrisches Bauelement sowie ein Verfahren zum Vergrößern der Induktivität eines elektrischen Bauelements.

In elektrischen Schaltungen können große Energiemengen gespeichert sein. Als Energiespeicher können z. B. Kondensatoren eingesetzt sein, aber auch Batterien oder andere Energiespeicher. Diese großen gespeicherten Energiemengen können im Fehlerfall erhebliche Probleme bereiten, insbesondere wenn die Energiemengen unkontrolliert und schlagartig freigesetzt werden. Dann sind die elektrischen Komponenten/Bauelemente der elektrischen Schaltungen oftmals nicht in der Lage, die freigesetzten Energiemengen aufzunehmen oder kontrolliert abzubauen (beispielsweise in Wärme umzuwandeln). Dies kann dann dazu führen, dass die elektrische Schaltung im Fehlerfall beschädigt oder vollständig zerstört wird, beispielsweise durch eine Explosion. Bei einer solchen Zerstörung kann es außerdem zu Folgeschäden an sonstigen Betriebsmitteln (beispielsweise an Gehäusen, Nachbarelementen oder Gebäuden) kommen. Ein Grund dafür ist beispielsweise, dass aufgrund der großen Energiemengen elektrische Lichtbögen oder große magnetische Stromkräfte auftreten können. Darüber hinaus können im Fehlerfall auch starke Verunreinigungen auftreten.

JP2007-288824 offenbart ein Bauelement mit einem Leiter, der mehrere Windungen aufweist, die im normalen Zustand elektrisch kurzgeschlossen sind. Der Kurzschluss wird zumindest teilweise beseitigt, wenn der Strom im Bauelement einen Grenzwert überschreitet. Der Erfindung liegt die Aufgabe zugrunde, ein elektrisches Bauelement und ein Verfahren anzugeben, mit denen eine elektrische Schaltung im Fehlerfall vor Beschädigung oder Zerstörung geschützt werden kann.

Diese Aufgabe wird erfindungsgemäß gelöst durch ein Bauelement und durch ein Verfahren nach den unabhängigen Patentansprüchen. Vorteilhafte Ausgestaltungen des Bauelements und des Verfahrens sind in den abhängigen Patentansprüchen angegeben.

Offenbart wird ein elektrisches Bauelement mit einem Leiter, der mehrere Leiterabschnitte aufweist, wobei die Leiterabschnitte elektrisch kurzgeschlossen sind, und der Kurzschluss (selbsttätig) zumindest teilweise beseitigt wird, wenn die Temperatur des Bauelements einen (bauelementspezifischen) Grenzwert überschreitet.

Bei diesem Bauelement ist besonders vorteilhaft, dass (solange die Temperatur unterhalb des Grenzwerts liegt) die Leiterabschnitte elektrisch kurzgeschlossen sind. Dadurch weisen die Leiterabschnitte nur einen geringen ohmschen Widerstand (der abhängig von dem verwendeten Leitermaterial ist) sowie eine geringe Induktivität auf. Allgemein gesagt weisen die Leiterabschnitte im kurzgeschlossenen Zustand nur eine geringe Impedanz auf. Dadurch wird eine elektrische Schaltung, in die dieses Bauelement eingebaut wird, bei Temperaturen unterhalb des Grenzwerts nur in sehr geringem Maße beeinflusst. Vorteilhafterweise wird jedoch der Kurzschluss (selbsttätig) zumindest teilweise beseitigt, wenn die Temperatur des Bauelements den Grenzwert überschreitet. Dadurch verändern sich die Eigenschaften des Bauelements (zum Beispiel kann sich die Impedanz vergrößern, insbesondere kann sich der ohmsche Widerstand und/oder die Induktivität des Bauelements vergrößern), so dass das Bauelement dann zum Schutz der elektrischen Schaltung verwendet werden kann.

Wenn die Temperatur des Bauelements unterhalb des Grenzwerts liegt, dann befindet sich die Temperatur im Nenntemperaturbereich und es liegt Nennbetrieb des Bauelements vor. Bei diesem Nennbetrieb sind die Leiterabschnitte elektrisch kurzgeschlossen. Aufgrund des Kurzschlusses sind die Leiterabschnitte elektrisch unwirksam. Im Fehlerfall überschreitet die Temperatur des Bauelements (aufgrund von auftretenden großen Fehlerströmen, welche durch das Bauelement fließen) den Grenzwert. Dann wird der Kurzschluss zumindest teilweise beseitigt. Daher weist das Bauelement bei Temperaturen unterhalb des Grenzwerts andere Eigenschaften auf als bei Temperaturen oberhalb des Grenzwerts. Diese unterschiedlichen Eigenschaften werden zum Schutz von elektrischen oder elektronischen Schaltungen/Schaltkreisen eingesetzt.

Mit anderen Worten gesagt, weist das Bauelement ein Kurzschlussbeseitigungsmittel auf, das den Kurzschluss zumindest teilweise beseitigt, wenn die Temperatur des Bauelements den (bauelementspezifischen) Grenzwert überschreitet. Die Leiterabschnitte weisen einen elektrischen Kurzschluss auf und das Kurzschlussbeseitigungsmittel ist in der Lage, den Kurzschluss zumindest teilweise zu beseitigen, wenn die Temperatur des Bauelements den Grenzwert überschreitet. Der Leiter kann insbesondere ein langgestreckter Leiter sein. Der Leiter kann mindestens ein Metall, insbesondere Kupfer und/oder Aluminium, aufweisen.

Das Bauelement kann so realisiert sein, dass der Kurzschluss zumindest teilweise beseitigt wird, wenn aufgrund eines durch das Bauelement fließenden elektrischen Stroms die Temperatur des Bauelements den Grenzwert überschreitet. Dabei ist das Bauelement so ausgestaltet, dass bei Fließen eines unzulässig großen elektrischen Stroms durch das Bauelement die Temperatur des Bauelements den Grenzwert überschreitet. Der Grenzwert ist bauelementespezifisch und hängt insbesondere von dem verwendeten Leitermaterial sowie von dem ohmschen Widerstand des Leiters im kurzgeschlossenen Zustand ab. Je höher dieser ohmsche Widerstand des Leiters bei kurzgeschlossenen Leiterabschnitten ist, desto höher ist der Temperaturanstieg aufgrund des durch das Bauelement fließenden elektrischen Stroms.

Das Bauelement kann auch so ausgestaltet sein, dass das Bauelement einen ersten elektrischen Anschluss und einen zweiten elektrischen Anschluss aufweist, der erste elektrische Anschluss mit einem ersten Ende des Leiters (elektrisch) verbunden ist und der zweite elektrische Anschluss mit einem zweiten Ende des Leiters (elektrisch) verbunden ist. Mittels des ersten elektrischen Anschlusses und des zweiten elektrischen Anschlusses kann der in einer elektrischen Schaltung fließende Strom in das Bauelement eingespeist werden. Bei elektrisch kurzgeschlossenen Leiterabschnitten ist zwischen dem ersten Anschluss und dem zweiten Anschluss im Wesentlichen nur der ohmsche Widerstand eines Teils des Materials des Leiters wirksam. Bei elektrisch kurzgeschlossenen Leiterabschnitten ist zwischen dem ersten Anschluss und dem zweiten Anschluss keine Induktivität oder nur eine vernachlässigbar kleine Induktivität wirksam.

Das Bauelement kann auch so ausgestaltet sein, dass die Leiterabschnitte jeweils Windungen einer (insbesondere spiralförmigen) Wicklung sind. Der Leiter weist also eine (spiralförmige) Wicklung auf. Wenn die Windungen elektrisch kurzgeschlossen sind, dann sind die Windungen elektrisch unwirksam.

Dabei kann das Bauelement auch so ausgestaltet sein, dass bei zumindest teilweise beseitigtem Kurzschluss die Induktivität des Bauelements vergrößert ist. Aufgrund des zumindest teilweise beseitigten Kurzschlusses sind die Windungen elektrisch wirksam, so dass die Induktivität des Bauelements vergrößert ist. Die vergrößerte Induktivität kann zum Schutz der Schaltung, in die das Bauelement eingebaut ist, verwendet werden. Insbesondere bremst diese vergrößerte Induktivität einen Anstieg des Stromflusses durch das Bauelement.

Das Bauelement kann so ausgestaltet sein, dass die Leiterabschnitte dadurch elektrisch kurzgeschlossen sind, dass die Leiterabschnitte unisoliert sind und die Leiterabschnitte aneinander anliegen. Insbesondere liegen die jeweils benachbarten Leiterabschnitte (entlang ihrer Erstreckung) aneinander an. Zusätzlich kann das Bauelement eine Spannvorrichtung aufweisen, welche die (benachbarten) Leiterabschnitte aufeinanderpresst. Dadurch ergibt sich bei Temperaturen unterhalb des Grenzwerts ein sehr geringer ohmscher Widerstand zwischen dem ersten elektrischen Anschluss und dem zweiten elektrischen Anschluss.

Das Bauelement ist so ausgestaltet, dass zwischen den (aneinander anliegenden) Leiterabschnitten ein Treibmaterial angeordnet ist, welches sein Volumen vergrößert, wenn die Temperatur des Bauelements den Grenzwert überschreitet. Dadurch werden die Leiterabschnitte, insbesondere die Windungen, voneinander weggedrückt/auseinandergedrückt, wodurch der Kurzschluss zumindest teilweise beseitigt wird. Mit anderen Worten weist das Bauelement als Kurzschlussbeseitigungsmittel das Treibmaterial auf.

Das Bauelement kann auch so ausgestaltet sein, dass die Leiterabschnitte eine erste Ausnehmung zur Aufnahme des Treibmaterials und/oder eine zweite Ausnehmung zur Aufnahme des Treibmaterials aufweisen. Diese erste Ausnehmung und/oder diese zweite Ausnehmung stellt jeweils eine Aufnahme für das Treibmaterial dar.

Dabei kann das Bauelement so realisiert sein, dass die erste Ausnehmung zwischen zwei benachbarten Leiterabschnitten angeordnet ist und/oder die zweite Ausnehmung zwischen zwei benachbarten Leiterabschnitten angeordnet ist.

Das Bauelement kann auch so ausgestaltet sein, dass die erste Ausnehmung auf einer Seite der Leiterabschnitte angeordnet ist und die zweite Ausnehmung auf der gegenüberliegenden Seite der Leiterabschnitte angeordnet ist.

Das Bauelement kann auch so realisiert sein, dass die erste Ausnehmung und/oder die zweite Ausnehmung eine (zumindest abschnittsweise) entlang der Leiterabschnitte verlaufende Ausnehmung ist.

Das Bauelement kann auch so ausgestaltet sein, dass die erste Ausnehmung und/oder die zweite Ausnehmung eine (zumindest abschnittsweise) entlang der Leiterabschnitte verlaufende Nut ist.

Das Bauelement kann so aufgebaut sein, dass das Treibmaterial einen Kunststoff, insbesondere ein Polymer, mit einem positiven Wärmeausdehnungskoeffizienten aufweist. Bei diesem Kunststoff handelt es sich also um einen volumenexpandierenden Kunststoff, insbesondere um ein volumenexpandierendes Polymer.

In einem Ausführungsbeispiel, welches nicht Teil der Erfindung ist, kann das Bauelement auch so ausgestaltet sein, dass die Leiterabschnitte dadurch elektrisch kurzgeschlossen sind, dass die Leiterabschnitte unisoliert sind und dass zwischen den Leiterabschnitten ein elektrisch leitfähiger Kunststoff angeordnet ist. Der elektrisch leitfähige Kunststoff schließt hier die einzelnen Leiterabschnitte kurz, so dass nur eine geringe elektrische Impedanz, insbesondere ein geringer ohmscher Widerstand des Leiters wirksam wird.

Das Bauelement kann auch so ausgestaltet sein, dass der Kunststoff bei Überschreiten des Grenzwerts der Temperatur seinen ohmschen Widerstand vergrößert, insbesondere indem der Kunststoff zumindest teilweise aufschmilzt und/oder gasförmig wird. Durch die entstehende Oberflächenschmelze oder die oberflächliche Gasschicht wird der Kurzschluss zumindest teilweise beseitigt. Mit anderen Worten gesagt, weist das Bauelement als Kurzschlussbeseitigungsmittel den Kunststoff auf, der bei Überschreiten des Grenzwerts der Temperatur seinen ohmschen Widerstand vergrößert, insbesondere indem der Kunststoff zumindest teilweise aufschmilzt und/oder gasförmig wird.

Offenbart wird weiterhin eine elektrische Schaltung mit einem Bauelement der vorstehend angegebenen Art.

Diese elektrische Schaltung kann so ausgestaltet sein, dass die Schaltung einen Energiespeicher aufweist, und das Bauelement in einer mit dem Energiespeicher elektrisch verbundenen Strombahn (Strompfad) angeordnet ist.

Offenbart wird außerdem ein Verfahren zum Vergrößern der Induktivität eines elektrischen Bauelements, wobei das Bauelement einen Leiter aufweist, der mehrere Leiterabschnitte aufweist, und wobei die Leiterabschnitte elektrisch kurzgeschlossen sind, wenn die Temperatur des Bauelements unterhalb eines (bauelementspezifischen) Grenzwerts liegt, wobei bei dem Verfahren der Kurzschluss zumindest teilweise beseitigt wird, wenn die Temperatur des Bauelements den Grenzwert überschreitet.

Das Verfahren kann auch so ausgestaltet sein, dass die Leiterabschnitte dadurch elektrisch kurzgeschlossen sind, dass die Leiterabschnitte unisoliert sind und die Leiterabschnitte aneinander anliegen, und bei Überschreiten des Grenzwerts der Temperatur ein zwischen den (aneinander anliegenden) Leiterabschnitten angeordnetes Treibmaterial sein Volumen vergrößert. Dadurch werden die Leiterabschnitte voneinander wegbewegt (weggedrückt), wodurch der Kurzschluss zumindest teilweise beseitigt wird. Insbesondere liegen die benachbarten Leiterabschnitte entlang ihrer Erstreckung aneinander an.

In einem Ausführungsbeispiel, welches nicht Teil der Erfindung ist, kann das Verfahren auch so realisiert sein, dass die Leiterabschnitte dadurch elektrisch kurzgeschlossen sind, dass die Leiterabschnitte unisoliert sind und dass zwischen den Leiterabschnitten ein elektrisch leitfähiges Material, insbesondere ein elektrisch leitfähiger Kunststoff, angeordnet ist. Das Verfahren kann auch so ablaufen, dass das Material, insbesondere der Kunststoff, bei Überschreiten des Grenzwerts der Temperatur seinen ohmschen Widerstand vergrößert. Dadurch wird der Kurzschluss zumindest teilweise beseitigt. Insbesondere ist zwischen den benachbarten Leiterabschnitten entlang ihrer Erstreckung das elektrisch leitfähige Material angeordnet.

Das Verfahren kann auch so ausgestaltet sein, dass das Material (insbesondere der Kunststoff) bei Überschreiten des Grenzwerts der Temperatur seinen ohmschen Widerstand vergrößert, indem das Material (insbesondere der Kunststoff) zumindest teilweise aufschmilzt und/oder gasförmig wird. Dadurch entsteht eine Oberflächenschmelze oder eine oberflächliche Gasschicht.

Das Verfahren kann auch so ablaufen, dass die Leiterabschnitte jeweils Windungen einer (insbesondere spiralförmigen) Wicklung sind. Wenn die Leiterabschnitte (d.h. die Windungen) elektrisch kurzgeschlossen sind, dann sind die Windungen elektrisch unwirksam. Mit anderen Worten gesagt, kann der Leiter die Windungen aufweisen, wobei die Windungen die Wicklung bilden.

Das Verfahren kann auch so realisiert sein, dass bei dem zumindest teilweisen Beseitigen des Kurzschlusses die Induktivität des Bauelements vergrößert wird. Aufgrund des zumindest teilweise beseitigten Kurzschlusses werden die Windungen elektrisch wirksam, wodurch die Induktivität des Bauelements vergrößert wird.

Im Folgenden wird die Erfindung anhand von Ausführungsbeispielen näher erläutert. Dazu ist in
- Figur 1: ein Ausführungsbeispiel eines Leiters mit einer Spannvorrichtung, in
- Figur 2: der Leiter aus Figur 1 mit sichtbaren elektrischen Anschlüssen, in
- Figur 3: der Leiter bei einer Temperatur unterhalb des Grenzwerts, in
- Figur 4: der Leiter bei einer Temperatur oberhalb des Grenz-werts, in
- Figur 5: eine Schnittdarstellung des Leiters gemäß Figur 3, in
- Figur 6: eine Schnittdarstellung des Leiters gemäß Figur 4, in
- Figur 7: ein weiteres Ausführungsbeispiel eines Leiters bei einer Temperatur unterhalb des Grenzwerts, in
- Figur 8: der Leiter gemäß Figur 7 bei einer Temperatur oberhalb des Grenzwerts, in
- Figur 9: eine Schnittdarstellung des Leiters gemäß Figur 7, in
- Figur 10: eine Schnittdarstellung des Leiters gemäß Figur 8, in
- Figur 11: ein weiteres Ausführungsbeispiel eines Leiters, welches nicht Teil der Erfindung ist, bei einer Temperatur unterhalb des Grenzwerts, in
- Figur 12: der Leiter gemäß Figur 11 bei einer Temperatur oberhalb des Grenzwerts, in
- Figur 13: eine Schnittdarstellung des Leiters gemäß Figur 11, in
- Figur 14: eine Schnittdarstellung des Leiters gemäß Figur 12, in
- Figur 15: ein vergrößerter Ausschnitt aus Figur 13, in
- Figur 16: ein vergrößerter Ausschnitt aus Figur 14, in
- Figur 17: eine beispielhafte elektrische Schaltung in Form einer Halbbrücke mit dem Bauelement, in
- Figur 18: eine weitere beispielhafte elektrische Schaltung in Form einer Vollbrücke mit dem Bauelement, in
- Figur 19: eine weitere beispielhafte elektrische Schaltung in Form eines Doppel-Clamp-Submoduls mit zwei Bauelementen und in
- Figur 20: die Schaltung gemäß Figur 19 mit einer veränderten Einbaulage der beiden Bauelemente
dargestellt.

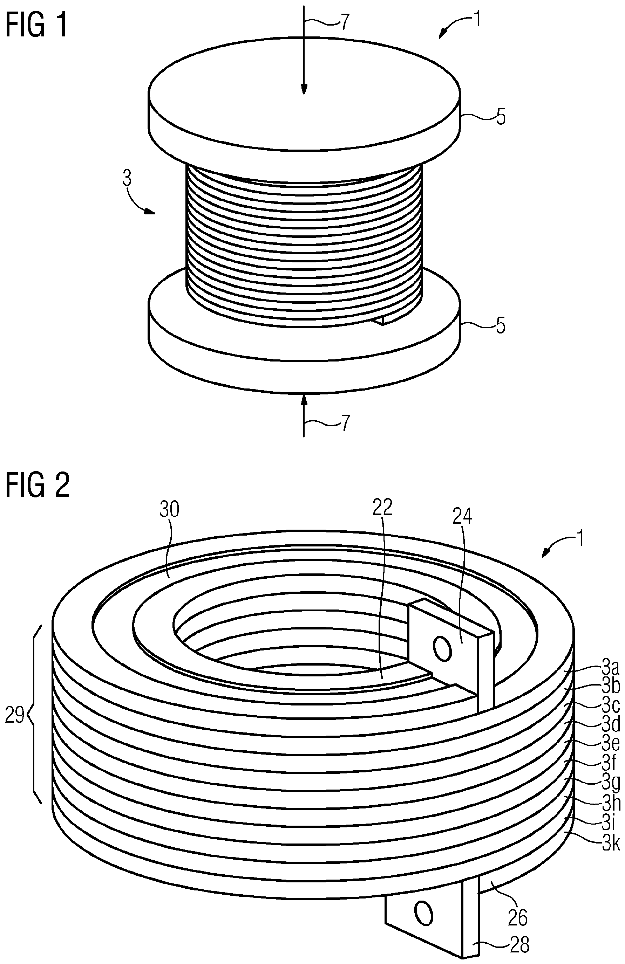

In Figur 1 ist eine schematische Darstellung eines Bauelements 1 mit einem elektrischen Leiter 3 angegeben. Der elektrische Leiter 3 hat die Form einer spiralförmigen Wicklung 3. Diese Wicklung 3 weist mehrere Leiterabschnitte auf, die jeweils als Windungen der Wicklung 3 ausgestaltet sind. Diese Leiterabschnitte/Windungen werden durch eine lediglich schematisch dargestellte Spannvorrichtung 5 gegeneinander verspannt, d. h. die Spannvorrichtung 5 presst die einzelnen Leiterabschnitte des Leiters 3 aufeinander. Mittels Pfeilen 7 sind symbolisch Kräfte dargestellt, welche mittels der Spannvorrichtung in den Leiter eingeleitet werden und welche die Leiterabschnitte/Windungen aufeinanderpressen. Die Spannvorrichtung 5 sorgt dafür, dass die Leiterabschnitte/Windungen unter einer definierten mechanischen Vorspannung stehen und bei Nennbetrieb sicher elektrisch kurzgeschlossen sind. Aufgrund der Vorspannung liegen die Windungen spaltfrei aneinander an und sind zuverlässig miteinander kontaktiert.

Die Spannvorrichtung weist zwei Druckplatten 5 auf, zwischen denen die Leiterabschnitte eingespannt sind. Dies ergibt einen Spannverband. Mittels der Druckplatten kann zusätzlich der elektrische Strom in das Bauelement eingeleitet werden. Alternativ können zur Stromeinleitung aber auch separate Stromschienen verwendet werden. In den Figuren 2 bis 16 ist die Spannvorrichtung 5 der Übersichtlichkeit halber jeweils weggelassen worden. Dennoch werden auch bei den Ausführungsbeispielen der Figuren 2 bis 16 jeweils solche Spannvorrichtungen eingesetzt.

In Figur 2 ist der Leiter 3 aus der Figur 1 ohne die Spannvorrichtung 5 dargestellt. Es ist gut zu erkennen, dass ein erstes Ende 22 des Leiters 3 mit einem ersten elektrischen Anschluss 24 des Bauelements elektrisch verbunden ist. Ebenso ist ein zweites Ende 26 des Leiters 3 mit einem zweiten elektrischen Anschluss 28 des Bauelements elektrisch verbunden. Mittels des ersten elektrischen Anschlusses 24 und des zweiten elektrischen Anschlusses 28 kann das Bauelement 1 mit Strombahnen/Strompfaden einer elektrischen Schaltung verbunden werden. Das Bauelement 1 dient dann zum Schutz der elektrischen Schaltung im Fehlerfall. Der erste elektrische Anschluss 24 und der zweite elektrische Anschluss 28 sind jeweils als Schraubanschluss ausgebildet.

Weiterhin ist in Figur 2 gut zu erkennen, dass der elektrische Leiter 3 eine Reihe von Leiterabschnitten 3a bis 3k aufweist. Diese Leiterabschnitte 3a bis 3k sind im Ausführungsbeispiel als Windungen 3a bis 3k einer spiralförmigen Wicklung 29 dargestellt. Der Leiter 3 weist also im Ausführungsbeispiel zehn Leiterabschnitte in Form von zehn Wicklungen 3a, 3b, 3c, 3d, 3e, 3f, 3g, 3h, 3i und 3k auf. Weiterhin ist in Figur 2 zu erkennen, dass der Leiter 3 eine erste Ausnehmung 30 aufweist. Diese erste Ausnehmung 30 ist im Ausführungsbeispiel als eine Nut 30 ausgestaltet. Die erste Ausnehmung 30 dient zur Aufnahme eines Treibmaterials. Die erste Ausnehmung 30 ist zwar nur beim ersten Leiterabschnitt 3a zu erkennen, aber auch die anderen Leiterabschnitte 3b bis 3k weisen eine derartige Ausnehmung auf. Die erste Ausnehmung 30 ist also jeweils zwischen benachbarten Leiterabschnitten angeordnet. Diese erste Ausnehmung 30 verläuft im Ausführungsbeispiel entlang der Leiterabschnitte und bildet eine spiralförmige Ausnehmung entlang des spiralförmigen Leiters.

Mechanisch kann das Bauelement beispielsweise an dem ersten Anschluss 24 oder an dem zweiten Anschluss 28 befestigt werden. Alternativ kann das Bauelement auch an der Spannvorrichtung 5 gehaltert werden.

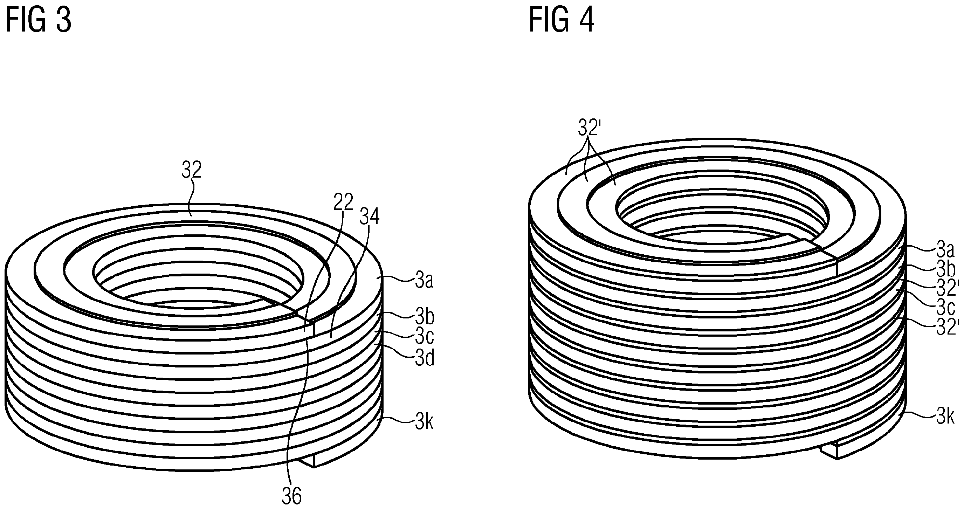

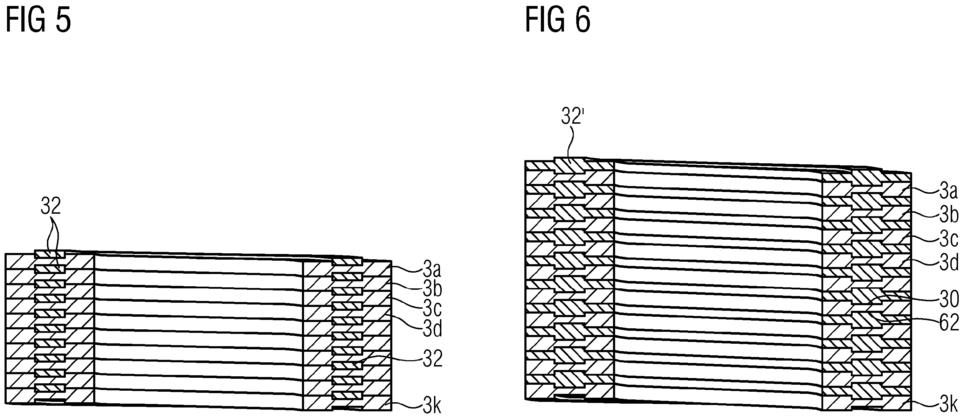

In Figur 3 ist der Leiter 3 aus Figur 2 ohne den ersten elektrischen Anschluss 24 und ohne den zweiten elektrischen Anschluss 28 dargestellt. Im Unterschied zu der Darstellung der Figur 2 ist bei der Darstellung der Figur 3 die erste Ausnehmung 30 mit einem Treibmaterial 32 versehen. Das Treibmaterial 32 füllt die erste Ausnehmung 30 aus und bildet daher (wie die erste Ausnehmung 30) einen spiralförmigen Strang aus Treibmaterial, welcher insbesondere zwischen den benachbarten Leiterabschnitten 3a, 3b usw. angeordnet ist. In der Darstellung der Figur 3 steht das Treibmaterial 32 über der stirnseitigen Begrenzungsfläche der Leiterabschnitte hervor, weil der Leiter 3 beidseitig eine Ausnehmung aufweist, vergleiche Figuren 5 und 6.

In Figur 3 ist der Leiter 3 im Normalbetrieb/Nennbetrieb dargestellt, d. h. der durch den Leiter 3 fließende Strom ist kleiner als ein maximal zulässiger Strom (Nennstrom). Daher erwärmt sich der Leiter 3 durch diesen Nennstrom nur leicht, so dass die Temperatur des Leiters unterhalb eines bauelementspezifischen Grenzwerts liegt. (Der bauelementspezifische Grenzwert der Temperatur kann beispielsweise 100°C oder 120 °C betragen; in Abhängigkeit von der Nennbetriebstemperatur der Schaltung kann der Grenzwert unterschiedliche Werte aufweisen.) Das Treibmaterial 32 befindet sich in seiner in Figur 3 dargestellten Ausgangsform, d. h. das Material hat sein Volumen nicht vergrößert; das Material ist nicht expandiert (nicht ausgedehnt). Die einzelnen Leiterabschnitte 3a bis 3k berühren (außerhalb der ersten Ausnehmung 30) jeweils den benachbarten Leiterabschnitt; die einzelnen Leiterabschnitte werden durch die (nicht dargestellte) Spannvorrichtung 5 aufeinander gepresst. Dadurch sind die einzelnen Leiterabschnitte 3a, 3b usw. elektrisch kurzgeschlossen, d. h. diese Leiterabschnitte sind nicht vollständig elektrisch wirksam. Beispielsweise berührt das erste Ende 22 des Leiters 3 (das auch ein erstes Ende des ersten Leiterabschnitts 3a darstellt) das zweite Ende 34 des ersten Leiterabschnitts 3a. Dadurch ist der erste Leiterabschnitt 3a elektrisch kurzgeschlossen, es besteht ein Kurzschluss 36. Der elektrische Strom fließt vom ersten Ende 22 unmittelbar und geradlinig zum zweiten Ende 34; er fließt nicht entlang des gewundenen ersten Leiterabschnitts 3a. Dies gilt in gleichartiger Weise auch für die anderen Leiterabschnitte 3b, 3c, 3d usw. Der von dem ersten elektrischen Anschluss 24 zu dem zweiten elektrischen Anschluss 28 fließende Strom fließt also im Wesentlichen geradlinig auf kürzestem Weg von dem ersten Anschluss 24 zu dem zweiten Anschluss 28. Insbesondere fließt der Strom nicht in einer Spiralform entlang der spiralförmigen Wicklung 29, so dass das Bauelement 1 keine bzw. nur eine vernachlässigbar kleine Induktivität aufweist.

Bei dem Treibmaterial 32 handelt es sich im Ausführungsbeispiel um einen Kunststoff, insbesondere um ein Polymer, mit einem positiven Wärmeausdehnungskoeffizienten. Das bedeutet, dass das Treibmaterial bei Erwärmung oberhalb des Grenzwerts sein Volumen vergrößert. Bei dem Bauelement 1 wird vorzugsweise ein Kunststoff mit einem großen positiven Wärmeausdehnungskoeffizienten verwendet, beispielsweise ein Polyethylen. Das Treibmaterial kann also ein volumenexpansiver Kunststoff sein. Das Treibmaterial 32 vergrößert sein Volumen (bezogen auf seine Ausgangsform bzw. das Ausgangsvolumen) deutlich, sobald die Temperatur des Bauelements den Grenzwert überschreitet. Mit anderen Worten dehnt sich das Treibmaterial 32 bei Überschreitung des Grenzwerts der Temperatur stark aus.

In Figur 4 ist der Leiter 3 bei Überstrom (also bei einem Strom größer des Nennstroms) dargestellt. Aufgrund des Überstroms hat sich der Leiter 3 stark erwärmt, so dass das Treibmaterial 32 sein Volumen stark vergrößert hat: es liegt ein volumenvergrößertes Treibmaterial 32' (expandiertes Treibmaterial 32', ausgedehntes Treibmaterial 32', aufgeblähtes Treibmaterial 32') vor. Das Volumen des Treibmaterials 32 hat sich ausgedehnt; das Treibmaterial 32' ist sozusagen aufgequollen. Durch diese Volumenvergrößerung drückt das Treibmaterial 32' die einzelnen Leiterabschnitte 3a, 3b usw. auseinander und füllt die entstehenden Zwischenräume zwischen den einzelnen Leiterabschnitten aus. Das Treibmaterial 32' bildet im volumenvergrößerten Zustand einen isolierenden Streifen, der zwischen den einzelnen Leiterabschnitten verläuft und diese elektrisch voneinander isoliert. Das Treibmaterial 32 ist sowohl im nicht volumenvergrößerten Zustand der Figur 3 als auch im volumenvergrößerten Zustand der Figur 4 elektrisch nicht leitend, d. h. ein elektrischer Isolator.

In der Praxis wird sich die Volumenvergrößerung des Treibmaterials 32 oftmals nicht so gleichmäßig und homogen stattfinden wie in Figur 4 dargestellt. Das bedeutet, in der Praxis wird das ausgedehnte Treibmaterial 32 möglicherweise an einer Stelle etwas dicker sein als an der anderen Stelle, so dass der Leiter 3 nicht mehr eine gleichmäßige Spiralform (wie in Figur 4 dargestellt) aufweist. Die Darstellung der Ausführungsbeispiele soll hier lediglich das Prinzip veranschaulichen - dies gilt auch für die anderen Figuren.

In Figur 5 ist eine Schnittdarstellung des Leiters gemäß der Figur 3 bei nicht ausgedehntem Treibmaterial dargestellt.

In Figur 6 ist eine Schnittdarstellung des Leiters gemäß der Figur 4 bei ausgedehntem Treibmaterial (d. h. im Fehlerfall) dargestellt.

Insbesondere in Figur 6 ist gut zu erkennen, dass die einzelnen Leiterabschnitte 3a, 3b usw. die erste Ausnehmung 30 und eine zweite Ausnehmung 62 aufweisen. Dabei ist die erste Ausnehmung 30 auf einer Seite der Leiterabschnitte und die zweite Ausnehmung 62 auf der gegenüberliegenden Seite der Leiterabschnitte angeordnet. Jede Leiterabschnitt weist also zwei Ausnehmungen auf: die erste Ausnehmung 30 auf der einen Seite und die zweite Ausnehmung 62 auf der anderen Seite. Dadurch steht in der ersten Ausnehmung 30 und in der zweiten Ausnehmung 62 viel Platz für das Treibmaterial 32 im nicht ausgedehnten Zustand zur Verfügung. Sowohl die erste Ausnehmung 30 als auch die zweite Ausnehmung 62 ist jeweils zwischen zwei benachbarten Leiterabschnitten angeordnet. Die erste Ausnehmung 30 und die dieser gegenüberliegende zweite Ausnehmung 62 kann auch als Doppelausnehmung bzw. Doppelnut bezeichnet werden.

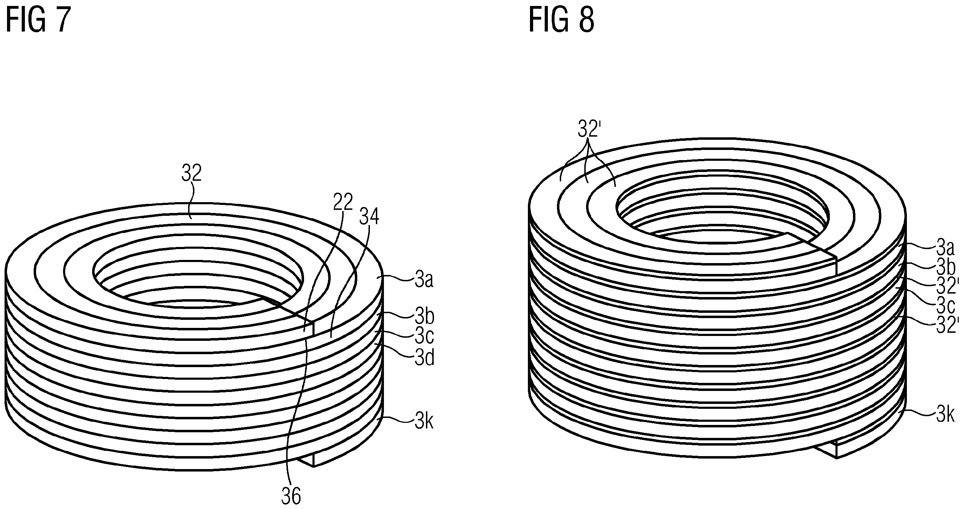

In Figur 7 ist ein Leiter 3 dargestellt, welcher (im Unterschied zu den Figuren 3 bis 6) nur eine erste Ausnehmung 30 aufweist, jedoch keine zweite Ausnehmung 62. Dies ist in der Figur 7 daran zu erkennen, dass das Treibmaterial 32 nicht über die Oberfläche des ersten Leiterabschnitts 3a hinausragt.

In Figur 8 ist der Leiter der Figur 7 im Fehlerfall (d. h. bei Temperaturen größer des Grenzwerts) dargestellt. Es ist gut zu erkennen, dass sich das Treibmaterial 32 ausgedehnt und die einzelnen Leiterabschnitte 3a, 3b, 3c usw. (d. h. die Windungen 3a, 3b, 3c usw. der spiralförmigen Wicklung 29) auseinandergedrückt hat.

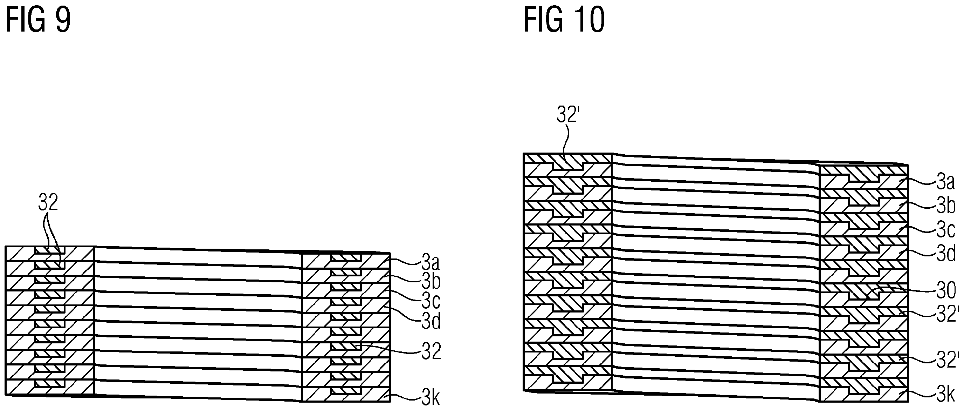

In Figur 9 ist eine Schnittdarstellung des Leiters gemäß der Figur 7 bei Nennbetrieb dargestellt.

In Figur 10 ist eine Schnittdarstellung des Leiters gemäß der Figur 8 im Fehlerfall dargestellt. In Figur 10 ist gut zu erkennen, dass jeder Leiterabschnitt 3a, 3b, 3c usw. nur die erste Ausnehmung 30 aufweist, jedoch nicht die zweite Ausnehmung 62. Dieses Bauelement weist also nur eine einfache Ausnehmung (Einfachausnehmung, Einfachnut) 30 auf.

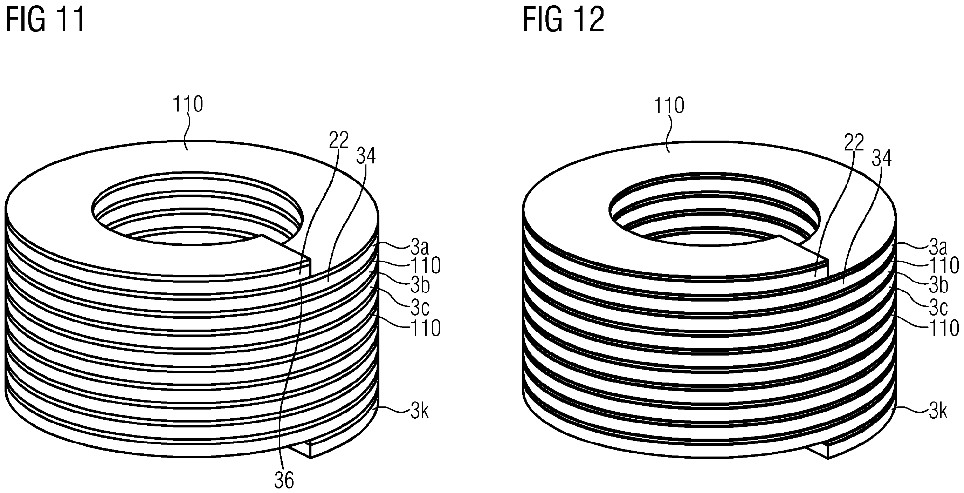

In den Figuren 11 bis 16 ist ein weiteres Ausführungsbeispiel des Bauelements ausschnittsweise dargestellt, welches nicht Teil der Erfindung ist.

In Figur 11 ist (ähnlich wie in Figur 3) der Leiter 3 dargestellt, welcher zehn Leiterabschnitte 3a bis 3k aufweist. Im Unterschied zu der Figur 3 weisen die Leiterabschnitte der Figur 11 jedoch keine Ausnehmungen auf. Stattdessen befindet sich zwischen den Leiterabschnitten 3a bis 3k ein elektrisch leitfähiges Material 110, insbesondere ein elektrisch leitfähiger Kunststoff 110, welcher die einzelnen Leiterabschnitte 3a, 3b, 3c usw. elektrisch leitend miteinander verbindet. Mittels dieses elektrisch hoch leitfähigen Materials 110 werden die einzelnen Leiterabschnitte elektrisch kurzgeschlossen.

Das elektrisch hoch leitfähige Material 110 kann beispielsweise ein elektrisch leitfähiger Kunststoff sein. Bei diesem Kunststoff kann es sich zum Beispiel um einen Graphit aufweisenden Kunststoff, um einen Metallstaub aufweisenden Kunststoff oder um einen Karbon-Nanotube-Material aufweisenden Kunststoff handeln. Bei diesem Material kann es sich beispielsweise um einen elektrisch hochleitfähigen Kunststoff, insbesondere um ein hochleitfähiges Polymer handeln, wie es aus der Offenlegungsschrift DE 43 30 607 A1 bekannt ist. Ein Beispiel für ein solches Polymer ist mit Graphit versetztes Polyethylen.

Die einzelnen Leiterabschnitte 3a bis 3k werden durch die (nicht dargestellte) Spannvorrichtung 5 aufeinander gepresst. Durch das zwischen den Leiterabschnitten angeordnete leitfähige Material 110 sind die einzelnen Leiterabschnitte 3a, 3b usw. elektrisch kurzgeschlossen, d. h. diese Leiterabschnitte sind nicht vollständig elektrisch wirksam. Beispielsweise ist das erste Ende 22 des Leiters 3 (das auch das erste Ende des ersten Leiterabschnitts 3a ist) mittels des leitfähigen Materials 110 mit dem zweiten Ende 34 des ersten Leiterabschnitts 3a elektrisch verbunden. Dadurch ist der erste Leiterabschnitt 3a elektrisch kurzgeschlossen, es besteht ein Kurzschluss 36. Der elektrische Strom fließt vom ersten Ende 22 unmittelbar und geradlinig zum zweiten Ende 34; er fließt nicht entlang des gewundenen ersten Leiterabschnitts 3a. Dies gilt in gleichartiger Weise auch für die anderen Leiterabschnitte 3b, 3c, 3d usw.

Figur 11 zeigt das Bauelement im Nennbetrieb, d. h. bei Nennstrom (welcher kleiner ist als der maximal zulässige Strom). Bei Nennbetrieb fließt der elektrische Strom also im Wesentlichen geradlinig auf kürzestem Weg von dem ersten Anschluss 24 zu dem zweiten Anschluss 28 (in der Figur 11 nicht dargestellt, vgl. Figur 1). Insbesondere fließt der Strom nicht in einer Spiralform entlang der spiralförmigen Wicklung 29, so dass das Bauelement 1 keine bzw. nur eine vernachlässigbar kleine Induktivität aufweist. Die einzelnen Windungen 3a, 3b, 3c usw. der spiralförmigen Wicklung 29 sind also nicht vollständig elektrisch wirksam.

In Figur 12 ist der Leiter gemäß der Figur 11 im Fehlerfall, d. h. bei Überstrom und damit bei einer Temperatur größer als der bauelementspezifische Grenzwert (Übertemperatur) dargestellt. Das elektrisch leitfähige Material 110 hat sich bei dieser Übertemperatur nicht nennenswert ausgedehnt, daher weist die Anordnung nach Figur 12 in etwa das gleiche Volumen auf wie die Anordnung nach der Figur 11. Jedoch hat das elektrisch leitfähige Material 110 aufgrund der Übertemperatur seinen ohmschen Widerstand vergrößert, es liegt hochohmiges Material vor. Der ohmsche Widerstand vergrößert sich, weil das elektrisch leitfähige Material 110 aufgrund der hohen Temperaturen teilweise aufschmilzt und/oder sogar teilweise gasförmig wird. Insbesondere finden die Prozesse des Aufschmelzens und Verdampfens an der Oberfläche des elektrisch leitfähigen Materials und damit an der Grenzfläche zwischen elektrisch leitfähigem Material und Leiter statt. Das teilweise aufgeschmolzene und/oder gasförmige Material 110 ist in Figur 12 mit stärkeren Linien angedeutet als in Figur 11.

Aufgrund des Entstehens einer Oberflächenschmelze bzw. sogar einer Oberflächen-Gasentwicklung wird der ohmsche Widerstand des elektrisch leitfähigen Materials bei hohen Temperaturen stark vergrößert. Dadurch wird der elektrische Kurzschluss zwischen den einzelnen Leiterabschnitten (und damit auch der beispielhaft genannte elektrische Kurzschluss 36) zumindest teilweise aufgehoben, so dass der elektrische Strom jetzt nicht mehr auf geradlinigem Weg zwischen den beiden elektrischen Anschlüssen 24 und 28 fließt. Vielmehr fließt der elektrische Strom auf spiralförmigem Weg von dem ersten Anschluss 24 über das erste Ende 22, über die spiralförmige Wicklung 29, über das zweite Ende 26 zu dem zweiten Anschluss 28. Damit werden die Leiterabschnitte bzw. Windungen 3a, 3b, 3c usw. in größerem Maße elektrisch wirksam und die Induktivität des Bauelements ist deutlich vergrößert.

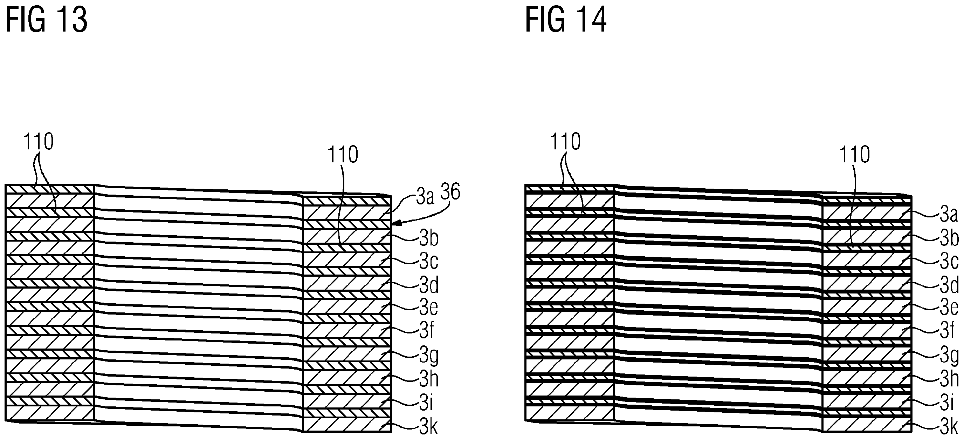

In Figur 13 ist eine Schnittdarstellung des Leiters gemäß der Figur 11 dargestellt; in Figur 14 ist eine Schnittdarstellung des Leiters gemäß der Figur 12 dargestellt.

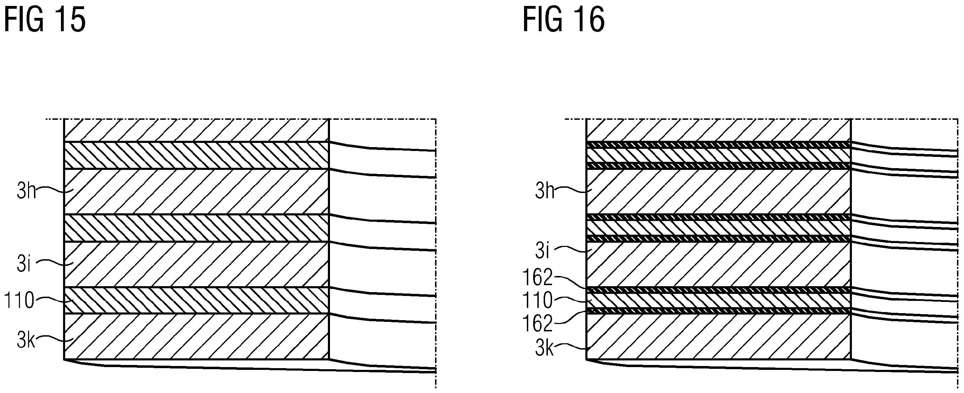

In den Figuren 15 und 16 ist jeweils ein vergrößerter Ausschnitt der Figuren 13 und 14 dargestellt (jeweils die linke untere Ecke). Dabei ist in Figur 16 gut zu erkennen, dass das elektrisch leitfähige Material 110 (insbesondere der elektrisch leitfähige Kunststoff) an seiner Oberfläche aufgeschmolzen ist, so dass eine Schicht 162 aus geschmolzenem Material sichtbar ist. Das Material 110 kann sogar schon teilweise oberflächlich verdampft sein; in diesem Falle stellt die Schicht 162 eine oberflächliche Dampfschicht bzw. eine oberflächliche gasförmige Schicht des Materials dar.

Bei dem Bauelement 1 gemäß den Figuren 2 bis 10 läuft also folgendes Verfahren ab: Die einzelnen Leiterabschnitte 3a, 3b, 3c usw. werden durch die Spannvorrichtung 5 aufeinander gepresst und sind dadurch elektrisch kurzgeschlossen. Bei Nennbetrieb (d. h. bei Nennstrom) erwärmt sich das Bauelement aufgrund seines nur geringen ohmschen Widerstands nur gering. Die Temperatur des Bauelements liegt unter dem bauelementspezifischen Grenzwert. Das Treibmaterial 32 vergrößert sein Volumen nicht oder nur vernachlässigbar und bleibt innerhalb der vorgesehenen Ausnehmungen 30 und/oder 62. Die Leiterabschnitte 3a, 3b, 3c usw. verbleiben in ihrem elektrisch kurzgeschlossenen Zustand.

Bei Auftreten eines Fehlerfalls fließt ein unzulässig großer Strom durch das Bauelement 1. Dadurch erwärmt sich das Bauelement und die Temperatur des Bauelements überschreitet den bauelementspezifischen Grenzwert. Bei Fehlerfällen mit sehr großen Fehlerströmen erfolgt diese Erwärmung sehr schnell, beispielsweise innerhalb von einigen Mikrosekunden oder Millisekunden. Es sind beispielsweise Fälle denkbar, bei denen im Nennbetrieb ein Strom von 1000 A durch das Bauelement fließt, im Fehlerfall jedoch ein Strom von 1 Million A. Hier wird also der zulässige Strom um einige Zehnerpotenzen überschritten, so dass die Temperatur des Bauelements außerordentlich schnell über den Grenzwert ansteigt (und auch weit über den Grenzwert ansteigt). Aufgrund dieser schlagartigen Erwärmung des Bauelements vergrößert das Treibmaterial 32 sein Volumen schlagartig und drückt die Leiterabschnitte 3a, 3b, 3c usw. auseinander. Dadurch wird der Kurzschluss der Leiterabschnitte (ganz oder teilweise) aufgehoben, wodurch die Leiterabschnitte (ganz oder teilweise) elektrisch wirksam werden. Dadurch vergrößert sich die Induktivität des Bauelements deutlich und das Bauelement wirkt aufgrund des nun vergrößerten induktiven Blindwiderstands dem plötzlichen Stromanstieg entgegen. Auf diese Art und Weise begrenzt das Bauelement im Fehlerfall den Strom.

Bei dem Bauelement gemäß den Figuren 11 bis 16 läuft das Verfahren wie folgt ab: Im Nennbetrieb sind die Leiterabschnitte 3a, 3b, 3c usw. durch das elektrisch leitfähige Material, insbesondere durch den elektrisch leitfähigen Kunststoff, elektrisch kurzgeschlossen. Im Fehlerfall schmilzt durch die (schnelle und starke) Temperaturerhöhung das Material (insbesondere an seiner Oberfläche) auf, es kann sogar teilweise verdampfen. Dadurch wird die elektrische Leitfähigkeit des Materials drastisch herabgesetzt, wodurch der Kurzschluss der Leiterabschnitte ganz oder teilweise aufgehoben wird. Der weitere Ablauf entspricht dem oben im Zusammenhang mit dem Bauelement gemäß den Figuren 2 bis 10 erläuterten Ablauf.

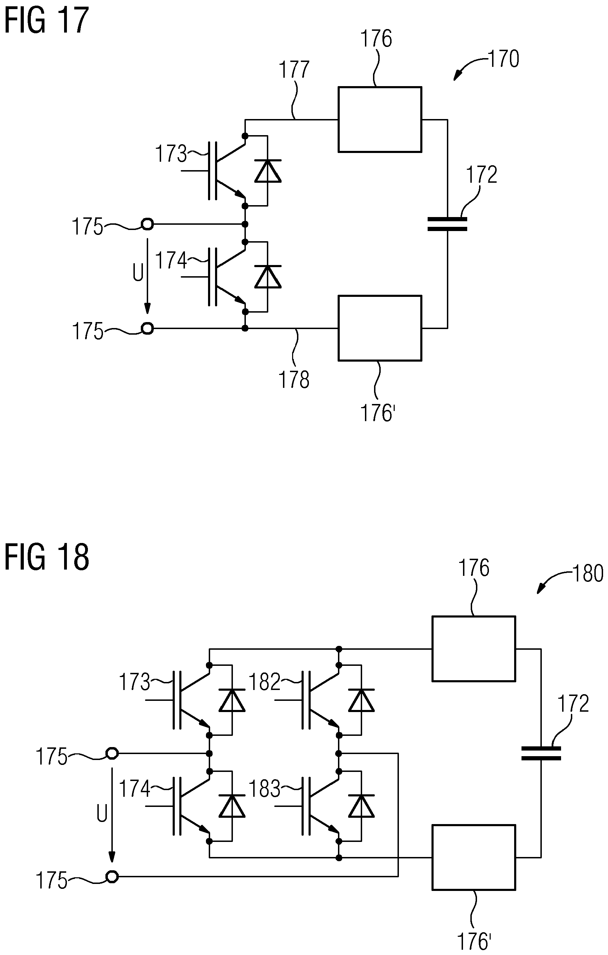

In Figur 17 ist ein Ausführungsbeispiel einer ersten elektrischen Schaltung 170 dargestellt, die einen Energiespeicher 172 in Form eines Kondensators 172 aufweist. Weiterhin weist die Schaltung einen ersten elektrischen Schalter 173 und einen zweiten elektrischen Schalter 174 auf. Der erste elektrische Schalter 173 und der zweite elektrische Schalter 174 sind im Ausführungsbeispiel jeweils als ein IGBT (Insulated Gate Bipolar Transistor) ausgestaltet. Antiparallel zu dem ersten elektrischen Schalter 173 ist eine erste Freilaufdiode geschaltet; antiparallel zu dem zweiten elektrischen Schalter 174 ist eine zweite Freilaufdiode geschaltet. Der erste elektrische Schalter 173 und der zweite elektrische Schalter 174 bilden eine elektrische Halbbrücke.

Wenn der erste elektrische Schalter 173 eingeschaltet ist und der zweite elektrische Schalter 174 ausgeschaltet ist, dann wird an Anschlusspunkten 175 die Spannung des Kondensators bzw. die Spannung des Energiespeichers 172 als eine Spannung u ausgegeben. Beispielsweise kann der Kondensator 172 auf Spannungen zwischen 2 kV und mehreren 100 kV aufgeladen sein.

Bei einem Defekt, insbesondere bei einem Durchschlag, des zweiten elektrischen Schalters 174 würde sich der Energiespeicher 172 schlagartig über den ersten elektrischen Schalter 173 und den zweiten elektrischen Schalter 174 entladen, wodurch sich die in dem Energiespeicher 172 gespeicherte elektrische Energie explosionsartig in Wärmeenergie umwandeln würde. Dies hätte eine Beschädigung oder Zerstörung der ersten elektrischen Schaltung 170 zur Folge. Zum Schutz vor einer derartigen Beschädigung/Zerstörung ist in die erste elektrische Schaltung 170 ein Bauelement der mittels der Figuren 1 bis 16 beschriebenen Art eingebaut. Dieses Bauelement kann als ein Widerstandselement, ein Widerstandselement mit Drosselfunktion, ein Sicherungselement, ein Schutzelement oder ein Schutzbauelement bezeichnet werden. Im Folgenden wird dieses Bauelement "Schutzbauelement" oder kurz "Bauelement" genannt.

Das Schutzbauelement kann entweder als ein Schutzbauelement 176 in die zu einem Anschluss des Energiespeichers 172 führende Strombahn/Strompfad 177 eingebaut sein oder als ein Schutzbauelement 176' in die zu einem zweiten Anschluss des Energiespeichers 172 führende Strombahn/Strompfad 178 eingebaut sein. Es braucht also nur das Schutzbauelement 176 oder das Schutzbauelement 176' eingebaut werden. Es ist nicht notwendig, beide Schutzbauelement 176 und 176' einzubauen. Allgemein wird das Schutzbauelement in die elektrische Strombahn (d.h. die elektrische Verbindung) zwischen Energiespeicher und den restlichen Bauelementen der Schaltung eingebaut. Bei Nennbedingungen (d. h. bei Nennstrom und daraus folgender Temperatur des Schutzbauelements unterhalb des Grenzwerts) wirkt das Schutzbauelement 176 nur als ein sehr geringer ohmscher Widerstand und beeinträchtigt daher die Funktion der ersten elektrischen Schaltung 170 nur unwesentlich. Im Fehlerfall (d. h. bei Auftreten von großen Fehlerströmen und dadurch erfolgender starker Erwärmung des Schutzbauelements 176) vergrößert das Schutzbauelement 176 schlagartig seine Induktivität und wirkt dadurch dem schnellen Stromanstieg entgegen. Dadurch wird die (ungewollte, weil fehlerhafte) Entladung des Energiespeichers 172 verlangsamt, so dass eine explosionsartige Energieumwandlung vermieden wird. Dadurch wird sowohl die erste Schaltung 170 als auch die Umgebung dieser Schaltung (Gehäuse, Räumlichkeiten, Gebäude) vor Beschädigung und/oder Verschmutzung geschützt.

In Figur 18 ist eine zweite elektrische Schaltung 180 dargestellt, welche im Ausführungsbeispiel als eine Vollbrücke mit Energiespeicher ausgestaltet ist. Neben dem dem Energiespeicher 172, dem ersten elektrischen Schalter 173 und dem zweiten elektrischen Schalter 174 und weist diese Schaltung einen dritten elektrischen Schalter 182 und einen vierten elektrischen Schalter 183 auf. Auch diese Schaltung 180 kann durch ein Schutzbauelement 176 oder ein Schutzbauelement 176' im Fehlerfall vor Beschädigung/Zerstörung geschützt werden.

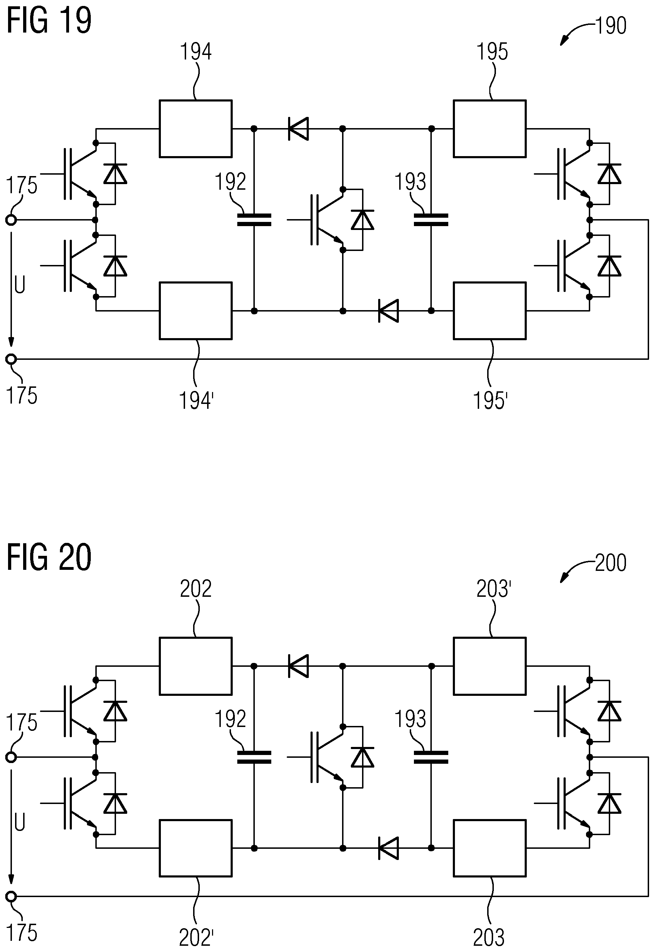

In Figur 19 ist eine dritte elektrische Schaltung 190 dargestellt, welche im Ausführungsbeispiel ein sogenanntes Doppel-Clamp-Submodul bildet. Ein solches Modul ist aus der Offenlegungsschrift DE 10 2009 057 288 A1 "Umrichter für hohe Spannungen" bekannt. Diese dritte elektrische Schaltung weist einen ersten Energiespeicher 192 und einen zweiten elektrischen Energiespeicher 193 auf. Der erste elektrische Energiespeicher 192 versorgt eine erste Halbbrücke (linksseitig des ersten elektrischen Energiespeichers 192 dargestellt) mit elektrischer Energie; der zweite elektrische Energiespeicher 193 versorgt eine zweite Halbbrücke (rechtsseitig des zweiten Energiespeichers 193 dargestellt) mit elektrischer Energie. Der erste elektrische Energiespeicher 192 und der zweite elektrische Energiespeicher 193 sind mittels eines zusätzlichen Schaltungszweiges miteinander verbunden.

Diese dritte elektrische Schaltung 190 kann geschützt werden, indem zwei Schutzbauelemente in diese Schaltung eingefügt werden: Entweder werden (im oberen Schaltungszweig) ein erstes Schutzbauelement 194 und ein zweites Schutzbauelement 195 eingefügt oder es werden (im unteren Schaltungszweig) ein erstes Schutzbauelement 194' und ein zweites Schutzbauelement 195' eingefügt.

Ähnlich zur ersten elektrischen Schaltung 170 der Figur 17 sind die Schutzbauelemente 194 und 195 (bzw. 194' und 195') zwischen dem elektrischen Energiespeicher und der von dem Energiespeicher versorgten Halbbrücke eingebaut.

In Figur 20 ist eine vierte elektrische Schaltung 200 dargestellt, welche gleichartig der dritten elektrischen Schaltung 190 aufgebaut ist. Im Unterschied zu der dritten elektrischen Schaltung 190 sind die Schutzbauelemente diagonal angeordnet: Entweder weist die vierte elektrische Schaltung 200 ein erstes Schutzbauelement 202 und ein zweites Schutzbauelement 203 auf oder die vierte elektrischen Schaltung 200 weist ein erstes Schutzbauelement 202' und ein zweites Schutzbauelement 203' auf.

Es ist also pro Halbbrücke oder pro Vollbrücke nur ein Schutzbauelement erforderlich. Beim Doppel-Clamp-Modul ist für jede Halbbrücke ein Schutzbauelement erforderlich.

Es wurde ein elektrisches Bauelement und ein Verfahren beschrieben, mit denen einem schnellen Stromanstieg wirkungsvoll entgegengewirkt werden kann. So können beispielsweise Schaltungsteile oder Schaltungen vor Beschädigung bzw. Zerstörung geschützt werden. Das Bauelement wird in Serie zum Leistungspfad (Leistungsstrompfad/Leistungsstrombahn) geschaltet.

Mit einem schnellen Stromanstieg verbundene Fehlerfälle können beispielsweise an Hochspannungsgleichstromübertragungsanlagen (HGÜ-Anlagen) auftreten. Zum Beispiel kann in Halbbrückenmodulen, Vollbrückenmodulen oder Doppel-Clamp-Modulen ein Brückenkurzschluss auftreten. So kann es bei einem Schaltversagen eines Halbleiterschalters beispielsweise zu einem kompletten Brückenkurzschluss kommen, zu einem Querzünder oder auch zu einem sogenannten Etagenüberschlag. Um hierbei die Schäden so gering wie möglich zu halten und auch Gebäude (z. B. Konverterhalle) möglichst nicht mit Schmutz zu kontaminieren, kann das beschriebene Bauelement eingesetzt werden. Mittels des Bauelements können sogar gespeicherten Energien sicher beherrscht werden, welche so groß sind, dass sie nicht durch einen passiven Schutz (wie beispielsweise eine die Halbleiterschalter umgebende Explosionsschutzzelle) beherrscht werden können. Das beschriebene Bauelement kann zusätzlich zu anderen, als solches bekannten Schutzelementen eingesetzt werden, beispielsweise zusätzlich zu parallel zum Strompfad geschalteten Thyristoren (sogenannten Crowbar-Thyristoren), zusätzlich zu in Serie geschalteten Widerstands-Induktivitäts-Kombinationen oder zusätzlich zu in Serie geschalteten Sicherungen.

Mit anderen Worten gesagt, weist das Bauelement einen gewickelten Spulenkörper auf, der bei Nennbetrieb aufgrund einer äußeren mechanischen Verspannung und aufgrund der elektrisch kurzgeschlossenen Leiterabschnitte lediglich als ein minimaler ohmscher Widerstand wirkt. Die Größe dieses minimalen ohmschen Widerstands ist abhängig vom Material (Materialwiderstand) und von den Kontaktübergängen an den Anschlüssen. Im Fehlerfall (d. h. bei Auftreten von hohen Fehlerströmen) entsteht in dem Bauelement eine elektrische Induktivität, d. h. das Bauelement wirkt im Fehlerfall als eine Drossel. Die im Fehlerfall wirksam werdende Größe der Induktivität kann mittels des mechanischen Aufbaus des Bauelements (beispielsweise mittels der verwendeten Wicklungszahl, Durchmessers usw.) eingestellt werden.

Im Unterschied zu normalen Drosseln sind die einzelnen Leiterabschnitte/Windungen nicht gegeneinander elektrisch isoliert. Sofern sich im Fehlerfall Lichtbögen zwischen benachbarten Windungen ausbilden würden, kann die Windungszahl erhöht werden und dadurch der Lichtbogenausbildung entgegengewirkt werden (sogenannter Kathodenfall und Anodenfall von Lichtbögen). Gegebenenfalls kann auch das mechanische Design des Bauelements geändert werden. Im Fehlerfall kommt es aufgrund des sehr hohen Fehlerstroms zu einem sehr hohen Energieeintrag in Form von Wärme in das Bauelement. Dieser Energieeintrag bzw. diese Wärmeenergie wird als Auslöser/Zünder für eine Folgereaktion verwendet. Durch die sehr schnelle Erwärmung des Bauelements kann eine nahezu verzögerungsfreie Folgereaktion/verzögerungsfreie Zündung ausgelöst werden.

Es wurden zwei verschiedene Varianten des Bauelements beschrieben. Bei der ersten Variante wird Treibmaterial (auch Zündmaterial genannt) in eine Nut zwischen den einzelnen Windungen eingebracht, wobei diese Nut ein- oder beidseitig der Leiterabschnitte/Windungen angeordnet sein kann. Das Treibmaterial verfügt über die Eigenschaft, bei Wärmeeintrag/Energieeintrag oberhalb eines bestimmten Grenzwerts sein Volumen schlagartig zu vergrößern. Dadurch wird die von einer äußeren Verspannungseinrichtung oder Spannvorrichtung (z. B. Federelemente oder andere mechanische Konstruktionen) aufgebrachte Kraft überschritten, so dass sich die einzelnen Windungen voneinander wegbewegen. Dadurch bildet sich eine Drossel aus. Die Induktivität dieser Drossel wirkt dann dem Fehlerstrom entgegen und dämpft den Fehlerstrom ab. Das Treibmaterial kann nichtreversibel sein, d. h. auch nach Wiederabkühlen behält es das vergrößerte Volumen bei. Dann ist die Induktivität/Drosselwirkung dauerhaft vorhanden und nach dem Fehlerfall muss das Bauelement ausgetauscht werden. Das Bauelement kann mit der kompletten elektrischen Schaltung getauscht werden oder es kann auch einzeln getauscht werden.

Bei der zweiten Variante des Bauelements sind die Leiterabschnitte/Windungen mittels eines elektrisch hoch leitfähigen Materials kurzgeschlossen. Bei diesem Material kann es sich beispielsweise um einen elektrisch hochleitfähigen Kunststoff, insbesondere um ein hochleitfähiges Polymer handeln. Im Nennbetrieb weist das Bauelement im Wesentlichen nur einen geringen ohmschen Widerstand auf. Im Fehlerfall bei starker Erwärmung schmilzt der Kunststoff an seine Oberfläche auf, d. h. er wird flüssig oder es bildet sich ein Flüssigkeitsdampfgemisch. Dadurch entsteht an der Oberfläche des Kunststoffs eine sehr dünne flüssige oder dampfartige Schicht (z.B. eine Polymerschicht), so dass der Kunststoff weniger gut den elektrischen Strom leitet. Diese flüssige oder dampfartige Schicht erhöht den ohmschen Anteil des Widerstands stark und bildet so eine Isolation zwischen den einzelnen Leiterabschnitten, so dass der induktive Anteil des Bauelements wirksam wird, d. h. es bildet sich ein Drosselelement.

Es wurde ein elektrisches Bauelement und ein Verfahren beschrieben, mit denen eine elektrische Schaltung im Fehlerfall vor Beschädigung oder Zerstörung durch schlagartige Entladung eines Energiespeichers geschützt werden kann.

## Patentansprüche

1. Elektrisches Bauelement (1) mit einem Leiter (3), der mehrere Leiterabschnitte (3a, 3b, 3c) aufweist, wobei
- die Leiterabschnitte (3a, 3b, 3c) elektrisch kurzgeschlossen (36) sind, und
- der Kurzschluss (36) zumindest teilweise beseitigt wird, wenn die Temperatur des Bauelements (1) einen Grenzwert überschreitet,
**dadurch gekennzeichnet, dass**
- zwischen den Leiterabschnitten (3a, 3b, 3c) ein Treibmaterial (32) angeordnet ist, welches sein Volumen vergrößert, wenn die Temperatur des Bauelements (1) den Grenzwert überschreitet.

2. Bauelement nach Anspruch 1,
**dadurch gekennzeichnet , dass**
- der Kurzschluss (36) zumindest teilweise beseitigt wird, wenn aufgrund eines durch das Bauelement fließenden elektrischen Stroms die Temperatur des Bauelements (1) den Grenzwert überschreitet.

3. Bauelement nach Anspruch 1 oder 2,
**dadurch gekennzeichnet, dass**
- das Bauelement (1) einen ersten elektrischen Anschluss (24) und einen zweiten elektrischen Anschluss (28) aufweist,
der erste elektrische Anschluss (24) mit einem ersten Ende (22) des Leiters verbunden ist und der zweite elektrische Anschluss (28) mit einem zweiten Ende (26) des Leiters verbunden ist.

4. Bauelement nach einem der vorhergehenden Ansprüche,
**dadurch gekennzeichnet, dass**
- die Leiterabschnitte (3a, 3b, 3c) jeweils Windungen (3a, 3b, 3c) einer Wicklung (29) sind.

5. Bauelement nach einem der vorhergehenden Ansprüche,
**dadurch gekennzeichnet , dass**
- bei zumindest teilweise beseitigtem Kurzschluss (36) die Induktivität des Bauelements (1) vergrößert ist.

6. Bauelement nach einem der vorhergehenden Ansprüche,
**dadurch gekennzeichnet, dass**
- die Leiterabschnitte (3a, 3b, 3c) dadurch elektrisch kurzgeschlossen sind, dass die Leiterabschnitte unisoliert sind und die Leiterabschnitte aneinander anliegen (36).

7. Bauelement nach einem der vorhergehenden Ansprüche,
**dadurch gekennzeichnet, dass**
- die Leiterabschnitte (3a, 3b, 3c) eine erste Ausnehmung (30) zur Aufnahme des Treibmaterials (32) und/oder eine zweite Ausnehmung (62) zur Aufnahme des Treibmaterials (32) aufweisen.

8. Bauelement nach Anspruch 7,
**dadurch gekennzeichnet, dass**
- die erste Ausnehmung (30) zwischen zwei benachbarten Leiterabschnitten (3a, 3b) angeordnet ist und/oder die zweite Ausnehmung (62) zwischen zwei benachbarten Leiterabschnitten (3b, 3c) angeordnet ist.

9. Bauelement nach Anspruch 7 oder 8,
**dadurch gekennzeichnet, dass**
- die erste Ausnehmung (30) auf einer Seite der Leiterabschnitte (3a, 3b, 3c) angeordnet ist und die zweite Ausnehmung (62) auf der gegenüberliegenden Seite der Leiterabschnitte (3a, 3b, 3c) angeordnet ist.

10. Bauelement nach einem der Ansprüche 7 bis 9,
**dadurch gekennzeichnet, dass**
- die erste Ausnehmung (30) und/oder die zweite Ausnehmung (62) eine entlang der Leiterabschnitte (3a, 3b, 3c) verlaufende Ausnehmung ist.

11. Bauelement nach einem der Ansprüche 7 bis 10,
**dadurch gekennzeichnet, dass**
- die erste Ausnehmung (30) und/oder die zweite Ausnehmung (62) eine entlang der Leiterabschnitte (3a, 3b, 3c) verlaufende Nut (30, 62) ist.

12. Bauelement nach einem der vorhergehenden Ansprüche,
**dadurch gekennzeichnet, dass**
- das Treibmaterial (32) einen Kunststoff, insbesondere ein Polymer, mit einem positiven Wärmeausdehnungskoeffizienten aufweist.

13. Elektrische Schaltung (170) mit einem Bauelement (1) nach einem der Ansprüche 1 bis 12.

14. Elektrische Schaltung nach Anspruch 13,
**dadurch gekennzeichnet, dass**
- die Schaltung einen Energiespeicher (172) aufweist, und
- das Bauelement (1) in einer mit dem Energiespeicher (172) elektrisch verbundenen Strombahn (177) angeordnet ist.

15. Verfahren zum Vergrößern der Induktivität eines elektrischen Bauelements (1), wobei das Bauelement einen Leiter (1) mit mehreren Leiterabschnitten (3a, 3b, 3c) aufweist, und wobei die Leiterabschnitte (3a, 3b, 3c) elektrisch kurzgeschlossen (36) sind, wenn die Temperatur des Bauelements unterhalb eines Grenzwerts liegt, wobei bei dem Verfahren
- der Kurzschluss (36) zumindest teilweise beseitigt (32') wird, wenn die Temperatur des Bauelements (1) den Grenzwert überschreitet,
**dadurch gekennzeichnet , dass**
- bei Überschreiten des Grenzwerts der Temperatur ein zwischen den Leiterabschnitten (3a, 3b, 3c) angeordnetes Treibmaterial (32) sein Volumen vergrößert (32').

16. Verfahren nach Anspruch 15,
**dadurch gekennzeichnet, dass**
- die Leiterabschnitte dadurch elektrisch kurzgeschlossen sind, dass die Leiterabschnitte unisoliert sind und die Leiterabschnitte aneinander anliegen (36).

17. Verfahren nach Anspruch 15 oder 16,
**dadurch gekennzeichnet , dass**
- die Leiterabschnitte (3a, 3b, 3c) jeweils Windungen (3a, 3b, 3c) einer Wicklung (29) sind.

18. Verfahren nach einem der Ansprüche 15 bis 17,
**dadurch gekennzeichnet, dass**
- bei dem zumindest teilweisen Beseitigen (32') des Kurzschlusses (36) die Induktivität des Bauelements (1) vergrößert wird.

## Claims

1. Electrical component (1) comprising a conductor (3) which has a plurality of conductor sections (3a, 3b, 3c), wherein
- the conductor sections (3a, 3b, 3c) are electrically short-circuited (36), and
- the short circuit (36) is at least partially eliminated when the temperature of the component (1) exceeds a limit value, **characterized in that**
- an expansion material (32) is arranged between the conductor sections (3a, 3b, 3c), the volume of said expansion material increasing when the temperature of the component (1) exceeds the limit value.

2. Component according to Claim 1,
**characterized in that**
- the short circuit (36) is at least partially eliminated when the temperature of the component (1) exceeds the limit value on account of an electric current which flows through the component.

3. Component according to Claim 1 or 2,
**characterized in that**
- the component (1) has a first electrical connection (24) and a second electrical connection (28), the first electrical connection (24) is connected to a first end (22) of the conductor, and the second electrical connection (28) is connected to a second end (26) of the conductor.

4. Component according to one of the preceding claims, **characterized in that**
- the conductor sections (3a, 3b, 3c) are each turns (3a, 3b, 3c) of a winding (29).

5. Component according to one of the preceding claims, **characterized in that**
- the inductance of the component (1) is increased when the short circuit (36) is at least partially eliminated.

6. Component according to one of the preceding claims, **characterized in that**
- the conductor sections (3a, 3b, 3c) are electrically short-circuited by the conductor sections being uninsulated and the conductor sections bearing against one another (36).

7. Component according to one of the preceding claims, **characterized in that**
- the conductor sections (3a, 3b, 3c) have a first recess (30) for receiving the expansion material (32) and/or a second recess (62) for receiving the expansion material (32).

8. Component according to Claim 7,
**characterized in that**
- the first recess (30) is arranged between two adjacent conductor sections (3a, 3b) and/or the second recess (62) is arranged between two adjacent conductor sections (3b, 3c).

9. Component according to Claim 7 or 8,
**characterized in that**
- the first recess (30) is arranged on one side of the conductor sections (3a, 3b, 3c) and the second recess (62) is arranged on the opposite side of the conductor sections (3a, 3b, 3c) .

10. Component according to one of Claims 7 to 9, **characterized in that**
- the first recess (30) and/or the second recess (62) are/is a recess which runs along the conductor sections (3a, 3b, 3c).

11. Component according to one of Claims 7 to 10, **characterized in that**
- the first recess (30) and/or the second recess (62) are/is a groove (30, 62) which runs along the conductor sections (3a, 3b, 3c).

12. Component according to one of the preceding claims, **characterized in that**
- the expansion material (32) comprises a plastic, in particular a polymer, with a positive coefficient of thermal expansion.

13. Electrical circuit (170) comprising a component (1) according to one of Claims 1 to 12.

14. Electrical circuit according to Claim 13,
**characterized in that**
- the circuit has an energy store (172), and
- the component (1) is arranged in a current path (177) which is electrically connected to the energy store (172).

15. Method for increasing the inductance of an electrical component (1), wherein the component has a conductor (1) comprising a plurality of conductor sections (3a, 3b, 3c), and wherein the conductor sections (3a, 3b, 3c) are electrically short-circuited (36) when the temperature of the component is below a limit value, wherein, in the method,
- the short circuit (36) is at least partially eliminated (32') when the temperature of the component (1) exceeds the limit value,
**characterized in that**
- the volume of an expansion material (32) which is arranged between the conductor sections (3a, 3b, 3c) increases (32') when the limit value for the temperature is exceeded.

16. Method according to Claim 15,
**characterized in that**
- the conductor sections are electrically short-circuited by the conductor sections being uninsulated and the conductor sections bearing against one another (36).

17. Method according to Claim 15 or 16,
**characterized in that**
- the conductor sections (3a, 3b, 3c) are each turns (3a, 3b, 3c) of a winding (29).

18. Method according to one of Claims 15 to 17,
**characterized in that**
- the inductance of the component (1) is increased when the short circuit (36) is at least partially eliminated (32').

## Revendications

1. Composant (1) électrique, comprenant un conducteur (3), qui a plusieurs tronçons (3a, 3b, 3c), dans lequel
- les tronçons (3a, 3b, 3c) du conducteur sont court-circuités (36) électriquement, et
- le court-circuit (36) est supprimé, au moins en partie, si la température du composant (1) dépasse une valeur limite,
**caractérisé en ce que**
- entre les tronçons (3a, 3b, 3c) du conducteur est disposé un matériau (32) d'excitation, qui augmente de volume, si la température du composant (1) dépasse la valeur limite.

2. Composant suivant la revendication 1,
**caractérisé en ce que**
- le court-circuit (36) est supprimé, au moins en partie, si, en raison d'un courant électrique passant dans le composant, la température du composant (1) dépasse la valeur limite.

3. Composant suivant la revendication 1 ou 2,
**caractérisé en ce que**
- le composant (1) a une première borne (24) électrique et une deuxième borne (28) électrique, la première borne (24) électrique est reliée à un premier bout (22) du conducteur et la deuxième borne (28) électrique est reliée à un deuxième bout (26) du conducteur.

4. Composant suivant l'une des revendications précédentes, **caractérisé en ce que**
- les tronçons (3a, 3b, 3c) du conducteur sont chacun des spires (3a, 3b, 3c) d'un enroulement (29).

5. Composant suivant l'une des revendications précédentes, **caractérisé en ce que**
- lorsque le court-circuit (36) est supprimé au moins en partie, l'inductance du composant (1) est augmentée.

6. Composant suivant l'une des revendications précédentes, **caractérisé en ce que**
- les tronçons (3a, 3b, 3c) du conducteur sont court-circuités électriquement, de manière à ce que les tronçons du conducteur ne soient pas isolés et de manière à ce que les tronçons du conducteur s'appliquent les uns aux autres (36).

7. Composant suivant l'une des revendications précédentes, **caractérisé en ce que**
- les tronçons (3a, 3b, 3c) du conducteur ont un premier évidement (30) de réception du matériau (32) d'excitation et/ou un deuxième évidement (62) de réception du matériau (32) d'excitation.

8. Composant suivant la revendication 7,
**caractérisé en ce que**
- le premier évidement (30) est disposé entre deux tronçons (3a, 3b) voisins du conducteur et/ou le deuxième évidement (62) est disposé entre deux tronçons (3b, 3c) voisins du conducteur.

9. Composant suivant la revendication 7 ou 8,
**caractérisé en ce que**
- le premier évidement (30) est disposé d'un côté des tronçons (3a, 3b, 3c) du conducteur et le deuxième évidement (62) est disposé du côté opposé des tronçons (3a, 3b, 3c) du conducteur.

10. Composant suivant l'une des revendications 7 à 9, **caractérisé en ce que**
- le premier évidement (30) et/ou le deuxième évidement (62) est un évidement s'étendant le long des tronçons (3a, 3b, 3c) du conducteur.

11. Composant suivant l'une des revendications 7 à 10, **caractérisé en ce que**
- le premier évidement (30) et/ou le deuxième évidement (62) est une rainure (30, 62) s'étendant le long des tronçons (3a, 3b, 3c) du conducteur.

12. Composant suivant l'une des revendications précédentes, **caractérisé en ce que**
- le matériau (32) d'excitation comporte une matière plastique, notamment un polymère à coefficient positif de dilatation sous l'effet de la chaleur.

13. Circuit (170) électrique ayant un composant (1) suivant l'une des revendications 1 à 12.

14. Circuit électrique suivant la revendication 13, **caractérisé en ce que**
- le circuit a un accumulateur (172) d'énergie, et
- le composant (1) est monté dans une voie (177) de courant reliée électriquement à l'accumulateur (172) d'énergie.

15. Procédé pour augmenter l'inductance d'un composant (1) électrique, comportant un conducteur (1) ayant plusieurs tronçons (3a, 3b, 3c) de conducteur, et dans lequel les tronçons (3a, 3b, 3c) du conducteur sont court-circuités (36) électriquement, si la température du composant est inférieure à une valeur limite, dans lequel, dans le procédé
- on supprime (32'), au moins en partie, le court-circuit (36), si la température du composant (1) dépasse la valeur limite,
**caractérisé en ce que**
- lorsque la valeur limite de la température est dépassée, un matériau (32) d'excitation, disposé entre les tronçons (3a, 3b, 3c) du conducteur, augmente (32) de volume.

16. Procédé suivant la revendication 15,
**caractérisé en ce que**
- les tronçons (3a, 3b, 3c) du conducteur sont court-circuités électriquement, de manière à ce que les tronçons du conducteur ne soient pas isolés et de manière à ce que les tronçons du conducteur s'appliquent les uns aux autres (36).

17. Procédé suivant la revendication 15 ou 16,
**caractérisé en ce que**
- les tronçons (3a, 3b, 3c) du conducteur sont chacun des spires (3a, 3b, 3c) d'un enroulement (29).

18. Procédé suivant l'une des revendications 15 à 17, **caractérisé en ce que**
- lorsque le court-circuit (36) est supprimé (32'), au moins en partie, on augmente l'inductance du composant (1).
